# EUROPÄISCHE PATENTSCHRIFT

(11) **EP 1 963 797 B1**
(45) Veröffentlichungstag und Bekanntmachung des Hinweises auf die Patenterteilung: **19.08.2009**
(21) Anmeldenummer: 06830119.1
(22) Anmeldetag: 24.11.2006
(51) Int. Cl.: G01F 23/296, G08C 19/04

(54) **SENSORSYSTEM ZUR BESTIMMUNG EINER PHYSIKALISCHEN MESSGRÖßE**
SENSOR SYSTEM FOR DETERMINING A PHYSICAL MEASUREMENT VARIABLE
SYSTEME DE DETECTEUR PERMETTANT DE DETERMINER UNE GRANDEUR PHYSIQUE DE MESURE

(30) Priorität: 23.12.2005 DE 102005062389
(43) Veröffentlichungstag der Anmeldung: 03.09.2008
(73) Patentinhaber: Endress+Hauser GmbH+Co. KG, 79689 Maulburg (DE)
(72) Erfinder: GROZINGER, Roland, 79129 Staufen (DE); RUF, Klaus, 79618 Rheinfelden (DE)
(74) Vertreter: Andres, Angelika Maria
(86) Internationale Anmeldenummer: PCT/EP2006/068907
(87) Internationale Veröffentlichungsnummer: WO 2007/074005

(56) Entgegenhaltungen:
- EP-A2- 0 340 953
- DE-A1- 10 323 063
- US-B1- 6 397 656

## Beschreibung

Die Erfindung betrifft ein Sensorsystem zur Bestimmung einer physikalischen Messgröße bestehend aus einem Sensor und einer Regel-/Auswerteeinheit, die räumlich von einander getrennt über ein Kabel mit zumindest zwei Leitern elektrisch leitend verbunden sind, wobei in dem Sensor ein Temperaturmesselement zur Bestimmung der Temperatur und ein Sensorkennelement zur Sensorerkennung ausgestaltet sind.

Derartige Sensorsysteme zur Bestimmung einer physikalischen Messgröße, insbesondere des Füllstands in einem Behälter, werden häufig in den Messgeräten der Automations- und Prozesssteuerungstechnik eingesetzt. Von der Anmelderin werden beispielsweise Messgeräte unter dem Namen Prosonic, FMU produziert und vertrieben, welche nach dem Laufzeit-Messverfahren arbeiten und dazu dienen, den Füllstand eines Füllguts in einem Behälter zu bestimmen und/oder zu überwachen. Bei der Laufzeitmessmethode werden beispielsweise die über einen Ultraschall-Transceiver erzeugten Ultra-/Schallsignale in den Prozessraum ausgesendet und die reflektierten Echowellen werden nach der abstandsabhängigen Laufzeit der Signale wieder von einem Sende-/Empfangselement empfangen. Aus der Zeitdifferenz zwischen dem Aussenden der Ultra-/Schallsignale und dem Empfang der reflektierten Echosignale lässt sich der Abstand des Messgerätes zu der Füllgutoberfläche ermitteln. Vorrichtungen und Verfahren zur Bestimmung des Füllstandes über die Laufzeit von Ultraschallsignalen, sowie auch von anderen Messsignalen, wie z.B. Radar nutzen die physikalische Gesetzmäßigkeit aus, wonach die Laufstrecke gleich dem Produkt aus der Laufzeit und der Ausbreitungsgeschwindigkeit ist. Unter Berücksichtigung der Geometrie des Behälterinnern und des Behälters wird dann der Füllstand des Füllguts als relative oder absolute Größe ermittelt.

Die Erzeugung der Schallwellen bzw. Ultraschallwellen und das Ermitteln der reflektierten Echowellen nach einer abstandsabhängigen Laufzeit können durch separate Sendeelemente und Empfangselemente oder durch gemeinsame Sende-/Empfangselemente erfolgen. In der Praxis kommt meist nur ein einzelnes Sende-/Empfangselement - ein so genannter Ultraschall-Transceiver -, der ein Sendesignal erzeugt und zeitlich versetzt ein Reflexionssignal bzw. ein Echosignal empfängt, zum Einsatz.

Die Laufzeit der Ultraschallwellen ist abhängig von der AusbreitungsGeschwindigkeit der Ultraschallwellen in der Gasphase über dem zu messenden Medium, welche allgemein als Gasphasengeschwindigkeit bezeichnet wird. Diese Gasphasengeschwindigkeit ist unter anderem stark von der Temperatur der Gasphase, in der sich die Ultraschallwelle ausbreitet, abhängig. Aus diesem Grund muss die Temperatur des Mediums zur Bestimmung der Gasphasengeschwindigkeit bekannt sein, damit aus der Laufzeit der Ultraschallsignale auf eine dementsprechende Laufstrecke umgerechnet werden kann.

Des Weiteren wird ein Ultraschallsensors so angeregt, dass dieser in der Resonanzfrequenz schwingt. In diesem Resonanzfrequenz-Mode des Ultraschallsensors wird eine möglichst hohe Sendeleistung des Ultraschallsignals erzielt. Die Resonanzfrequenz des Ultraschallsensors ist abhängig sowohl von geometrischen Größen des Sensors und dessen Sensorelement als auch von der Umgebungstemperatur.

In der DE 103 23 063, DE 42 33 257 C1 und der DE 42 23 346 C2 sind Füllstandsmessgeräte mit Ultraschallsensoren beschrieben, die die Resonanzfrequenz des Ultraschallsensors bei verschiedenen Temperaturen bestimmen. In diesen Ultraschallsensoren sind Temperatursensoren integriert, die dazu dienen, die aktuelle Umgebungstemperatur des Ultraschallsensors zu erfassen. Anhand der aktuellen Umgebungstemperatur wird die Resonanzfrequenz der Ultraschallsensoren im Sendebetrieb von dem Messumformer durch Änderung der Anregung nachgeführt und angepasst. Aus aktuellen Werten und Historien-Werten, der Resonanzfrequenz und der Umgebungstemperatur kann auch eine Aussage über die Anlagerung von Medium am Ultraschallsensor, den so genannten Ansatz, getroffen werden.

In der DE 198 08 994 C2 wird hingegen eine Vorrichtung beschrieben, die mittels einem Temperaturkompensationskondensator im Ultraschallsensor einer Abweichung der temperaturabhängigen Resonanzfrequenz des Ultraschallwandlers, veranlasst durch eine Änderung der Umgebungstemperatur, entgegenwirkt.

In Prozessanlagen gibt es verschiedene Messbedingungen, wie beispielsweise Behältergeometrien, Reichweite, Messwertauflösung, Messmedium, die meist nicht alleine durch einen einzigen Ultraschallsensor abgedeckt werden können. Deshalb werden je nach Messaufgabe diesen Messbedingungen angepasste Ultraschallsensoren mit bestimmten Arbeitsfrequenzen bzw. Resonanzfrequenzen eingesetzt. Damit diese unterschiedlichen Ultraschallsensoren in ihrer jeweiligen Resonanzfrequenz arbeiten können, müssen diese mit einem entsprechenden Anregungssignal durch den Messumformer angesteuert werden. Hierzu ist es notwendig, den Typ des angeschlossenen Ultraschallsensors zu kennen. Eine Möglichkeit ist es, den Typ des angeschlossenen Ultraschallsensors durch ein integriertes Sensorkennelement, beispielsweise in der Form eines Kennwiderstandes, automatisch ermitteln zu lassen. In der DE 40 35 403 A1 ast ein solcher Kennwiderstand im Sensorkörper integriert, der von der Steuereinheit bzw. dem Messumformer ausgelesen wird, wodurch eine feste Verbindung zwischen Sensor und Steuereinheit besteht und die Art des Sensors festgestellt wird.

Zur unabhängigen Auswertung des Sensorkennelements und des Temperaturmesselements durch den Messumformer, werden in üblichen Geräten beide Elemente getrennt voneinander vom Messumformer ausgewertet, was einen erhöhten Verbindungsaufwand und Messaufwand zwischen dem Sensor und dem Messumformer verursacht.

Der Erfindung liegt die Aufgabe zu Grunde, eine Sensoreinheit zur Reduktion des Verbindungsaufbaus und Messaufwands zwischen Sensor und Messumformer aufzuzeigen, sowie deren Messgenauigkeit zu erhöhen.

Diese Aufgabe wird erfindungsgemäß durch ein Sensorsystem gelöst, bei dem die Regel-/Auswerteeinheit das Temperaturmesselement und das Sensorkennelement über einen gemeinsamen Leiter mit einer positiven Spannung oder einer negativen Spannung ansteuert und je nach angelegter Spannung einen Temperaturmesswert des Temperaturelements oder einen Kennwert des Sensorelements ausliest.

Gemäß einer Ausgestaltung des Sensorsystems ist im Temperaturmesselement ein temperaturabhängiger Widerstand und/oder im Sensorkennelement ein entsprechender Kennwiderstand vorgesehen.

Gemäß einer weiteren Ausgestaltung des Sensorsystems ist im Temperaturmesselement und/oder im Sensorkennelement zumindest ein elektrisches Sperrelement vorgesehen.

Eine zweckmäßige Ausgestaltung des Sensorsystems ist, dass in Reihe zum temperaturabhängigen Widerstand und/oder in Reihe zum Kennwiderstand jeweils ein elektrisches Sperrelement mit gegensätzlichen Sperrrichtungen vorgesehen ist.

Gemäß einer vorteilhaften Ausführungsform des Sensorsystems ist vorgesehen, dass das Sperrelement als Diode ausgestaltet ist.

Eine sehr vorteilhafte Variante des Sensorsystems ist, dass das Sperrelement als Feldeffekttransistor bzw. unipolarer Transistor ausgestaltet ist.

Gemäß einer vorteilhaften Ausführungsform des Sensorsystems ist vorgesehen, dass der Feldeffekttransistor zu dem temperaturabhängigen Widerstand des Temperaturmesselements oder zu dem Kennwiderstand des Sensorkennelements so angeordnet ist, dass ein Spannungsabfall am temperaturabhängigen Widerstand oder am Kennwiderstand den Feldeffekttransistor schaltet.

In einer vorteilhaften Ausführungsform des Sensorsystems wird vorgeschlagen, dass ein Schaltelement in der Regel-/Auswerteeinheit vorgesehen ist, das im Wechsel die positive Spannung oder die negative Spannung und entsprechende Vorwiderstände auf den gemeinsamen Leiter schaltet.

Gemäß einer vorteilhaften Ausführungsform des Sensorsystems bilden die jeweils angelegte positive Spannung oder negative Spannung mit dem entsprechenden Vorwiderstand und dem Sensorkennelement oder dem Temperaturmesselement über die zwei Leiter des Kabels einen Spannungsteiler aus.

Eine ergänzende vorteilhafte Ausgestaltung des Sensorsystems sieht vor, dass es sich bei dem Sensor um einen Ultraschallsensor zur Ermittlung eines Füllstandes in einem Behälter handelt, in dem als Sensorelement zur Ermittlung der physikalischen Größe ein piezoelektrischer Wandler vorgesehen ist.

Weiterhin wird vorgeschlagen, dass ein dritter Leiter im Kabel vorgesehen ist, der zur Ansteuerung des Sensorelements durch die Regel-/Auswerteeinheit dient.

Weitere Merkmale und Vorteile der Erfindung ergeben sich aus der nachstehenden Beschreibung, in der der Aufbau und die Funktionsweise zwei verschiedener Ausführungsformen gemäß der Erfindung anhand von schematischen Zeichnungen im Einzelnen erläutert sind. Zur Vereinfachung sind in den Zeichnungen identische Teile mit dem gleichen Bezugszeichen versehen worden: Es zeigt:

Fig. 1 ein erstes Ausführungsbeispiel eines Sensorsystems zur Ermittlung des Füllstands mit Sperrelementen in Form von Dioden, welche seriell zum Kennwiderstand des Sensorkennelements und zum temperaturabhängigen Widerstand des Temperaturmesselements konträr angeordnet sind, und

Fig. 2 ein zweites Ausführungsbeispiel eines Sensorsystems zur Ermittlung des Füllstands mit Sperrelementen in Form von Feldeffekttransistoren, welche seriell zum Kennwiderstand des Sensorkennelements und zum temperaturabhängigen Widerstand des Temperaturmesselements konträr angeordnet sind.

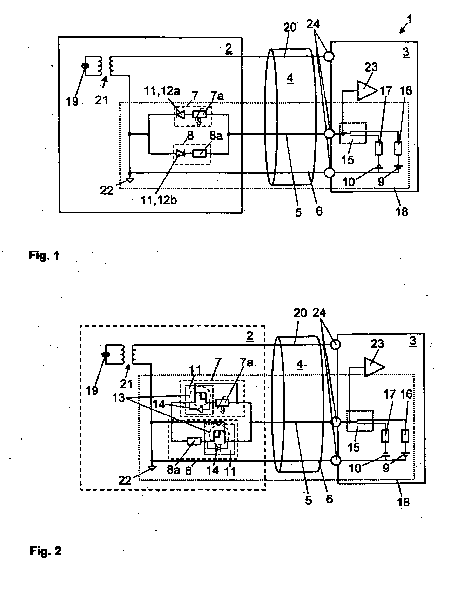

In Fig. 1 ist ein Sensorsystem 1 gezeigt, dessen Sensor 2 von der Regel-Auswerteeinheit 3 räumlich abgesetzt, über ein Kabel 4 mit Leitern 5, 6, 20 elektrisch leitend verbunden ist. Die Regel-/Auswerteeinheit 3 wird im Allgemeinen auch als Messumformer 3 bezeichnet. Das Kabel 4 mit den Leitern 5, 6, 20 ist über eine Anschlussklemme 24 an der Regel-/Auswerteinheit 3 lösbar und elektrisch leitend angeschlossen. Der Sensor 2 ist beispielsweise mechanisch fest mit dem Kabel 4 und überdies elektrisch leitend mit den im Kabel 4 ausgebildeten Leitern 5, 6, 20 verbunden. Diese Verbindungsstrecke zwischen Sensor 2 und Messumformer 3 über das Kabel 4 kann in den Automations- und Prozessanlagen mehrere Meter betragen. Über einen dritten Leiter 20 im Kabel 4 und den Bezugsmasse-Leiter 6 als Rückleiter wird bei einem Ultraschallsensor ein Übertrager 21 mit einer Spannung von ungefähr 55 Volt angesteuert. Dieser Übertrager 21 transformiert die Spannung nochmals hoch. Mit der hochtransformierten Spannung von ungefähr 400-800 Volt wird ein piezoelektrisches Wandlerelement als Sensorelement 19 zu Schwingungen angeregt. Dieses piezoelektrische Wandlerelement erzeugt mit dem umgebenden Aufbau ein Verbundschwingsystem, das mit einer bestimmten Resonanzfrequenz schwingt.

Im Sensor 2 ist ein Temperaturmesselement 7 zur Ermittlung der Temperatur ϑ und ein Sensorkennelement 8 zur Bestimmung des angeschlossenen Sensortyps integriert. Dieses Temperaturmesselement 7 und das Sensorkennelement 8 sind in Parallelzweigen des gemeinsamen Leiters 5 angeordnet und beinhalten jeweils ein Sperrelement 11 mit unterschiedlichen Durchlassrichtungen. In diesem ersten Ausführungsbeispiel ist das Temperaturmesselement 7 als ein temperaturabhängiger Widerstand 7a mit einer seriell angeordneten ersten Diode 12a als Sperrelement 11 ausgestaltet, und das Sensorkennelement 8 ist als ein Kennwiderstand 8a mit einer seriell angeordneten zweiten Diode 12b als Sperrelement 11 ausgestaltet. Über einen gemeinsamen Leiter 5 und einen Bezugsmasse-Leiter 6 als Rückleiter wird von dem Messumformer das Temperaturmesselement 7 und/oder das Sensorkennelement 8 je nach angelegter Spannung abwechselnd oder nach einem vorgegebenen Schema ausgelesen. Meist wird jedoch das Sensorkennelement 8 nur während der Inbetriebnahme des Sensorsystems 1 vom Messumformer 3 ausgelesen, und die Temperatur ϑ wird über das Temperaturmesselement 7 stetig oder alternierend während der gesamten Messphase des Sensorsystems 1 ausgelesen. Hierzu wird über diesen gemeinsamen Leiter eine positive Spannung 9 oder negative Spannung 10 über ein im Messumformer 3 integriertes Schaltelement 15 auf den gemeinsamen Leiter 5 geschaltet. Als Schaltelement 15 sind beispielsweise zwei komplementäre Feldeffekttransistoren (CMOS) verwendbar, wodurch auch ein hochohmiger Zustand des Schaltelements 15 erzeugt werden kann. Hierdurch befindet sich das Schaltelement 15 und der gemeinsame Leiter 5 in einem potentialfreien Zustand, wenn beide Feldeffekttransistoren nicht durchgeschaltet sind und somit im hochohmigen Zustand sind.

Die Auswertung des Temperaturmesswerts des Sensors 2 erfolgt beispielsweise dadurch, dass durch das Schaltelement 15 die positive Spannung 9 mit dem ersten Vorwiderstand 16 auf den gemeinsamen Leiter 5 geschalten wird. Die erste Diode 12a als Sperrelement 11 des Temperaturmesselements 7 befindet sich bei einer positiven angelegten Spannung 9 in Durchlassrichtung, wodurch infolge des Stromflusses über den temperaturabhängigen Widerstand 7a eine temperaturcharakteristische Spannung abfällt. Dieser Spannungsabfall wird von dem Spannungsteiler 18, der sich aus dem ersten Vorwiderstand 16, dem temperaturabhängigen Widerstand 7a und der ersten Diode 12a zusammensetzt - über eine Spannungsmesseinrichtung 23 von der Anschlussklemme 24 des gemeinsamen Leiters 5 ermittelt. Da sich die zweite Diode 12b in Sperrrichtung befindet, fließt in diesem Zweig des Sensorkennelementes 8 kein Messstrom, der das Messergebnis des Temperaturwertes verfälschen könnte. Die resultierende Spannung, die von der Spannungsmesseinrichtung 23 ermittelt wird, ist nur abhängig von dem temperaturabhängigen Widerstand 8a und der Durchlassspannung der ersten Diode 12a.

Dementsprechend erfolgt die Auswertung des Kennwerts des Sensors 2 beispielsweise dadurch, dass durch das Schaltelement 15 die negative Spannung 10 mit dem zweiten Vorwiderstand 17 auf den gemeinsamen Leiter 5 geschaltet wird. Die zweite Diode 12b als Sperrelement 11 des Sensorkennelements 8 befindet sich bei einer negativen angelegten Spannung 10 in Durchlassrichtung, wodurch infolge des Stromflusses über den Kennwiderstand 8a eine vom Sensortyp abhängige Spannung abfällt. Dieser Spannungsabfall wird von dem Spannungsteiler 18, der sich aus dem zweiten Vorwiderstand 17, dem Kennwiderstand 7a und der zweiten Diode 12b zusammensetzt - über einen Spannungsmesseinrichtung 23 an der Anschlussklemme 24 des gemeinsamen Leiters 5 ermittelt. Der Bezugsmasse-Leiter 6 dient in diesen Fällen als Rückleitung des Messstroms. Da sich die erste Diode 12a in Sperrrichtung befindet, fließt in diesem Zweig des Temperaturmesselementes 7 kein Messstrom, der das Messergebnis des Kennwerts verfälschen würde. Die resultierende Spannung, die von der Spannungsmesseinrichtung 23 ermittelt wird, ist nur abhängig von dem Kennwiderstand 8a und der Durchlassspannung der zweiten Diode 12b.

Die resultierenden Spannungen, die von der Spannungsmesseinrichtung 23 ermittelt werden, sind proportional zum zu messenden Temperaturwert oder zum Kennwert des entsprechenden Sensors 2. Die beispielsweise positive resultierende Spannung des Temperaturwertes und die negative resultierende Spannung des Kennwertes werden in der Spannungsmesseinrichtung 23 und einer folgenden, hier nicht explizit gezeigten Auswerteelektronik weiter ausgewertet. Durch die unterschiedliche Polarität der beiden resultierenden Spannungen wird eine sehr große Störsicherheit bei der Ermittlung der beiden Werte, wie beispielsweise einem Temperaturwert und einem Kennwert eines Sensors 2, erreicht. Es ist auch möglich, die Widerstandselemente, wie den temperaturabhängigen Widerstand 7a und/oder den Kennwiderstand 8a, nur durch Dioden 12 mit unterschiedlichen Durchlasskennlinien, welche auch eine starke Temperaturabhängigkeit aufwiesen können, zu ersetzen. Dies hat den Vorteil, dass das Widerstandselement als Schaltungselement eingespart werden kann.

Die Temperaturabhängigkeit der Kennlinie von Dioden 12 im Durchlassbereich hat hingegen auch den Nachteil, dass die Temperatur ϑ nicht exakt bestimmt werden kann. Die Durchlasskennlinie von bipolaren Dioden 12 variiert stark mit der Temperatur. Aus der Formel für die ideale Diode ergibt sich unter Berücksichtigung der Temperatur die bekannte Shockley-Gleichung, die die allgemeine Beziehung zwischen dem Durchlassstrom und der Durchlassspannung einer Diode beschreibt. Bipolar Elemente weisen im Allgemeinen ein negatives Temperaturverhalten auf, das dem Messeffekt der Temperatur ϑ am temperaturabhängigen Widerstand entgegensteht. Somit heben sich beide Temperatureffekte am temperaturabhängigen Widerstand 7a und an der Diode teilweise auf bzw. beeinflussen sich gegenseitig. Da in dieser ersten Ausführungsform das positive Temperaturverhalten des temperaturabhängigen Widerstands 7a durch das negative Temperaturverhalten der ersten Diode 12a in einer nicht vorhersagbaren Art und Weise beeinflusst wird, ist eine genaue Bestimmung vor allem der aktuellen Temperatur ϑ nur bedingt möglich. Des Weiteren wird durch den Spannungsabfall an den Dioden zusätzliche Leistung, z.B. als Wärme, im Sensor umgesetzt, die dem beispielsweise mit einer über eine 4-20 mA Stromschleife gespeisten Sensorsystem 1 nicht mehr zur Verfügung steht.

Um den Energieverbrauch des Sensorsystems 1 zu verringern und den Einfluss der temperaturabhängigen Kennlinie von Dioden 12 auf den Temperaturwerts bzw. resultierenden Spannungswert zu vermeiden, wurden grundlegend in einem zweiten Ausführungsbeispiel in Fig. 2 die Dioden 12 durch Feldeffekttransistoren 13 ersetzt.

In dem zweiten Ausführungsbeispiel sind zwei selbstsperrende N-Kanal MOS-FET's (Metal-Oxid-Semiconductor-Feldeffekttransistoren) dargestellt. Es versteht sich von selbst, dass in Bezug auf die Erfindung jegliche Art von Feldeffekttransistoren bzw. unipolaren Transistoren eingesetzt werden kann.

Ein entscheidender Vorteil des Feldeffekttransistors gegenüber der bipolar Technik mit Bipolartransistoren und mit Dioden ist, dass das Durchschalten der Source-Drain-Strecke durch anlegen eines Potentials am Gate rein kapazitiv erfolgt, wodurch der Feldeffekttransistor nahezu leistungslos bzw. stromlos angesteuert werden kann. Gegenüber der bipolarer Technik weist der Leitungskanal des MOS-FET's eine reine Widerstandscharakteristik auf, die den statischen Spannungsabfall und die statische Verlustleistung im Betrieb bestimmt. Erst dadurch werden die hohen Wirkungsgrade von leistungselektronischen Schaltungen besonders bei niedrigen Spannungen und geringer zur Verfügung stehender Energie möglich. Im Gegensatz zu bipolaren Transistoren mit deren negativem Temperaturverhalten besitzt der Leitungskanal des MOS-FET's ein positives Temperaturverhalten. Dadurch ist es möglich, dass mehrere MOS-FET's ohne zusätzliche symmetrierende Maßnahmen parallel geschaltet werden, um die Stromtragfähigkeit zu erhöhen und den Spannungsabfall am Leitungskanal zu verringern.

Das Temperaturmesselement 7 arbeitet in dieser zweiten Ausführungsform nach folgender Methode. Beim Anlegen einer positiven Spannung 9 leitet die parasitäre Diode 14, die prozesstechnisch bedingt im Feldeffekttransistor 13 physikalisch integriert ist, einen minimalen Strom. Dieser Stromfluss reicht aus, damit die Steuerelektrode (Gate) des Feldeffekttransistors 13 auf einem positiveren Potential als die Zuleitungselektrode (Source) liegt. Je höher die angelegte Spannung zwischen Source und Gate ist, desto niederohmiger wird die Schaltungstrecke bzw. der Kanal zwischen der Ableitungselektrode (Drain) und der Zuleitungselektrode (Source) des Feldeffekttransistors 13. Der resultierende Kanalwiderstand des durchgeschalteten Feldeffekttransistors 13 liegt im Bereich von unter einem Ω (Ohm), weshalb dieser keinen Einfluss auf die Temperaturmessung mit einem temperaturabhängigen Widerstand im kW-Bereich (Kiloohm) hat. Die parasitäre Diode 14 ist über den durchgeschalteten Leitungskanal des Feldeffekttransistors 13 kurz geschlossen und hat somit keine Auswirkungen auf die resultierende Spannung. Der im Parallelmesszweig des gemeinsamen Leiters 5 in dem Sensorkennelement 8 integrierte Feldeffekttransistor 13 hat auch keinen weiteren Einfluss auf die resultierende Spannung, da sich die parasitäre Diode 14 im Feldeffekttransistor 13 des Sensorkennelements 8 in Sperrrichtung befindet und das Gate auf einem negativeren Potential gegenüber der Source liegt. Die am Spannungsteiler 18 von der Spannungsmesseinrichtung 23 abgegriffene resultierende Spannung wird nur noch von dem temperaturabhängigen Widerstand 7a beeinflusst und ist somit zu diesem proportional.

Wird hingegen eine negative Spannung 10 über das Schaltelement 15 an den gemeinsamen Leiter 5 angelegt, steuert der Feldeffekttransistor 13 im Sensorkennelement 8 vollständig durch, Durch den Zweig des Temperaturmesselements 7 fließt kein Strom, da dieser Feldeffekttransistor 13 und dessen parasitäre Diode 14 den Strom vollständig sperren. Das Schaltverhalten des Feldeffekttransistors 13 im Sensorkennelement 8 ist das gleiche wie im Temperaturmesselement 7, welches schon zuvor ausführlich beschrieben wurde. Der Kennwiderstand 8a des Sensorkennelements 8 liegt im Bereich über 20 kΩ (Kiloohm), weshalb der Widerstand des Kanals des Feldeffekttransistors von kleiner einem Ω (Ohm) im vollständig durchgeschalteten Zustand keinen Einfluss auf die resultierende Spannung hat.

**Bezugszeichenliste**

**Tabelle 1**

| | |
|---|---|
| 1 | Sensorsystem |
| 2 | Sensor |
| 3 | Regel-/Auswerteeinheit, Messumformer |
| 4 | Kabel |
| 5 | gemeinsamer Leiter |
| 6 | Bezugsmasse-Leiter |
| 7 | Temperaturmesselement |
| 7a | temperaturabhängiger Widerstand |
| 8 | Sensorkennelement |
| 8a | Kennwiderstand |
| 9 | positive Spannung |
| 10 | negative Spannung |
| 11 | Sperrelement |
| 12 | Diode |
| 12a | erste Diode |
| 12b | zweite Diode |
| 13 | Feldeffekttransistor, unipolarer Transistor |
| 13a | erster Feldeffekttransistor |
| 13b | zweiter Feldeffekttransistor |
| 14 | parasitäre Diode |
| 15 | Schaltelement |
| 16 | erster Vorwiderstand |
| 17 | zweiter Vorwiderstand |
| 18 | Spannungsteiler |
| 19 | Sensorelement |
| 20 | dritter Leiter |
| 21 | Übertrager, Transformator |
| 22 | Masse |
| 23 | Spannungsmesseinrichtung |
| 24 | Anschlussklemme |
| ϑ | Temperatur |

## Patentansprüche

1. Sensobvorrichtung (1) zur Bestimmung einer physikalischen Messgröße bestehend aus einem Sensor (2) und einer Regel-/Auswerteeinheit (3), die räumlich von einander getrennt über ein Kabel (4) mit zumindest zwei Leitern (5, 6) elektrisch leitend verbunden sind, wobei in dem Sensor (2) ein Temperaturmesselement (7) zur Bestimmung der Temperatur (ϑ) und ein Sensorkennelement (8) zur Sensorerkennung ausgestaltet sind, **dadurch gekennzeichnet, dass** die Regel-/Auswerteeinheit (3) das Temperaturmesselement (7) und das Sensorkennelement (8) über einen gemeinsamen Leiter (5) mit einer positiven Spannung (9) bzw. einer negativen Spannung (10) ansteuert und je nach angelegter Spannung (9,10) einen Temperaturmesswert des Temperaturelements (7) bzw. einen Kennwert des Sensorelements (8) ausliest.

2. Vorrichtung nach Anspruch 1, **dadurch gekennzeichnet, dass** im Temperaturmesselement (7) ein temperaturabhängiger Widerstand (7a) und/oder dass im Sensorkennelement (8) ein entsprechender Kennwiderstand (8a) vorgesehen ist.

3. Vorrichtung nach Anspruch 1 oder 2, **dadurch gekennzeichnet, dass** im Temperaturmesselement (7) und/oder im Sensorkennelement (8) zumindest ein elektrisches Sperrelement (11) vorgesehen ist.

4. Vorrichtung nach Anspruch 1, 2 oder 3, **dadurch gekennzeichnet, dass** in Reihe zum temperaturabhängigen Widerstand (7a) und/oder in Reihe zum Kennwiderstand (8a) jeweils ein elektrisches Sperrelement (11) mit gegensätzlichen Sperrrichtungen vorgesehen sind/ist.

5. Vorrichtung nach Anspruch 3 oder 4, **dadurch gekennzeichnet, dass** das Sperrelement (11) als Diode (12) ausgestaltet ist.

6. Vorrichtung nach Anspruch 3 oder 4, **dadurch gekennzeichnet, dass** das Sperrelement (11) als Feldeffekttransistor (13) bzw. unipolarer Transistor ausgestaltet ist.

7. Vorrichtung nach Anspruch 6, **dadurch gekennzeichnet, dass** der Feldeffekttransistor (13) zu dem temperaturabhängigen Widerstand des Temperaturmesselements (7) oder az dem Kennwiderstand des Sensorkennelements (8) so angeordnet ist, dass ein Spannungsabfall am temperaturabhängigen Widerstand oder am Kennwiderstand den Feldeffekttransistor (13) schaltet.

8. Vorrichtung nach Anspruch 1 oder 3, **dadurch gekennzeichnet, dass** ein Schaltelement (14) in der Regel-/Auswerteeinheit (3) vorgesehen ist, das im Wechsel die positive Spannung (9) oder die negative Spannung (10) und entsprechenden Vorwiderständen (16,17) auf den gemeinsamen Leiter (5) schaltet.

9. Vorrichtung nach Anspruch 8, **dadurch gekennzeichnet, dass** die jeweils angelegte positive Spannung (9) oder negative Spannung (10) mit dem entsprechenden Vorwiderstand (16, 17) und dem Sensorkennelement (8) oder dem Temperaturmesselement (7) über die zwei Leiter (5, 6) des Kabels (4) einen Spannungsteiler (18) ausbilden.

10. Vorrichtung nach Anspruch 1, **dadurch gekennzeichnet, dass** es sich bei dem Sensor (2) um einen Ultraschallsensor zur Ermittlung eines Füllstandes in einem Behälter handelt, in dem als Sensorelement (19) zur Ermittlung der physikalischen Größe ein piezoelektrischer Wandler vorgesehen ist.

11. Vorrichtung nach Anspruch 1 oder 10, **dadurch gekennzeichnet, dass** ein dritter Leiter (20) im Kabel (4) vorgesehen ist, der zur Ansteuerung des Sensorelements (19) durch die Regel-/Auswerteeinheit (3) dient.

## Claims

1. Sensor unit (1) for determining a physical measured variable comprising a sensor (2) and a control/evaluation unit (3), which are physically separated from one another and are electrically connected via a cable (4) with at least two wires (5, 6), where the sensor (2) accommodates a temperature measuring element (7) for determining the temperature (u) and a sensor identification element (8) for sensor identification, **characterized in that** the control/switching unit (3) controls the temperature measuring element (7) and sensor identification element (8) via a common wire (5) with a positive voltage (9) or a negative voltage (10) and, depending on the voltage applied (9, 10), reads out a temperature measured value of the temperature element (7) or a characteristic value of the sensor element (8).

2. Unit as per Claim 1, **characterized in that** a temperature-dependent resistor (7a) is provided in the temperature measuring element (7) and/or a corresponding identification resistor (8a) is provided in the sensor identification element (8).

3. Unit as per Claim 1 or 2, **characterized in that** at least one electrical blocking element (11) is provided in the temperature measuring element (7) and/or in the sensor identification element (8).

4. Unit as per Claim 1, 2 or 3, **characterized in that** an electrical blocking element (11) with opposing blocking directions is/are provided in series to the temperature-dependent resistor (7a) and/or in series to the identification resistor (8a).

5. Unit as per Claim 3 or 4, **characterized in that** the blocking element (11) is designed as a diode (12).

6. Unit as per Claim 3 or 4, **characterized in that** the blocking element (11) is designed as a field effect transistor (13) or a unipolar transistor.

7. Unit as per Claim 6, **characterized in that** the field effect transistor (13) is arranged vis-à-vis the temperature-dependent resistor of the temperature measuring element (7), or vis-à-vis the identification resistor of the sensor identification element (8) in such a way that a drop in voltage at the temperature-dependent resistor or at the identification resistor causes the field effect transistor to switch.

8. Unit as per Claim 1 or 3, **characterized in that** a switching element (14) is provided in the control/evaluation unit (3) which alternately switches the positive voltage (9) or the negative voltage (10) and the corresponding protective resistors (16, 17) to the common wire (5).

9. Unit as per Claim 8, **characterized in that** the positive voltage (9) or the negative voltage (10) applied form a voltage divider (18) with the corresponding protective resistor (16, 17) and the sensor identification element (8) or the temperature measuring element (7) via the two wires (5, 6) of the cable (4).

10. Unit as per Claim 1, **characterized in that** the sensor (2) is an ultrasonic sensor for determining a level in the container in which a piezoelectric converter is provided as a sensor element (19) for determining the physical variable.

11. Unit as per Claim 1 or 10, **characterized in that** a third wire (20) is provided in the cable (4) which allows the control/evaluation unit (3) to control the sensor element (19).

## Revendications

1. Dispositif capteur (1) destiné à la détermination d'une grandeur de mesure physique, composé d'un capteur (2) et d'une unité de régulation et d'exploitation (3), qui sont séparés dans l'espace et reliés au moyen d'un câble (4) avec au moins deux conducteurs (5, 6) électroconducteurs, le capteur (2) comprenant un élément de mesure de température (7) destiné à la détermination de la température (□) et un élément caractéristique de capteur (8) en vue de l'identification du capteur, **caractérisé en ce que** l'unité de régulation et d'exploitation (3) commande l'élément de mesure de température (7) et l'élément caractéristique de capteur (8) par le biais d'un conducteur commun (5) avec une tension positive (9) ou une tension négative (10) et, selon la tension appliquée (9, 10), lit une valeur de mesure de température de l'élément de température (7) ou une valeur caractéristique de l'élément caractéristique de capteur (8).

2. Dispositif selon la revendication 1, **caractérisé en ce qu'**est prévue dans l'élément de mesure de température (7) une résistance (7a) dépendant de la température et/ou qu'est prévue dans l'élément caractéristique de capteur (8) une résistance caractéristique (8a) correspondante.

3. Dispositif selon la revendication 1 ou 2, **caractérisé en ce qu'**est prévue dans l'élément de mesure de température (7) et/ou dans l'élément caractéristique de capteur (8) au moins un élément de blocage électrique (11).

4. Dispositif selon la revendication 1, 2 ou 3, **caractérisé en ce qu'**est prévu, en série de la résistance dépendant de la température (7a) et/ou en série de la résistance caractéristique (8a), respectivement un élément de blocage électrique (11) avec des sens de blocage contraires.

5. Dispositif selon la revendication 3 ou 4, **caractérisé en ce que** l'élément de blocage (11) est conçu en tant que diode (12).

6. Dispositif selon la revendication 3 ou 4, **caractérisé en ce que** l'élément de blocage (11) est conçu en tant que transistor à effet de champ (13) ou transistor unipolaire.

7. Dispositif selon la revendication 6, **caractérisé en ce que** le transistor à effet de champ (13) est disposé par rapport à la résistance dépendant de la température (7) ou par rapport à la résistance caractéristique de l'élément caractéristique de capteur (8) de telle sorte qu'une chute de tension au niveau de la résistance dépendant de la température ou de la résistance caractéristique commute le transistor à effet de champ (13).

8. Dispositif selon la revendication 1 ou 3, **caractérisé en ce qu'**un élément de commutation (14) est prévu dans l'unité de régulation et d'exploitation (3), lequel commute en alternance la tension positive (9) ou la tension négative (10) et les résistances série (16, 17) correspondantes sur le conducteur commun (5).

9. Dispositif selon la revendication 8, **caractérisé en ce que** la tension positive (9) ou la tension négative (10) respectivement appliquée constitue un diviseur de tension (18) avec la résistance série (16, 17) correspondante et l'élément caractéristique de capteur (8) ou l'élément de mesure de température (7) via les deux conducteurs (5, 6) du câble (4).

10. Dispositif selon la revendication 1, **caractérisé en ce que** concernant le capteur (2), il s'agit d'un capteur à ultrasons destiné à la détermination d'un niveau de remplissage au sein d'un réservoir, dans lequel est prévu en tant qu'élément capteur (19) un convertisseur piézoélectrique, destiné à la détermination de la grandeur physique.

11. Dispositif selon la revendication 1 ou 10, **caractérisé en ce qu'**un troisième conducteur (20) est prévu dans le câble (4), lequel sert à la commande de l'élément capteur (19) par l'unité de régulation et d'exploitation.
